# EUROPÄISCHE PATENTSCHRIFT

(11) **EP 2 602 472 B1**
(45) Veröffentlichungstag und Bekanntmachung des Hinweises auf die Patenterteilung: **04.05.2016**
(21) Anmeldenummer: 12193207.3
(22) Anmeldetag: 19.11.2012
(51) Int. Cl.: F02M 37/22, B01D 17/04, B01D 36/00

(54) **Kraftstofffilter einer Brennkraftmaschine und Filterelement eines Kraftstofffilters**
Fuel filter of an internal combustion engine and filter element of a fuel filter
Filtre de carburant d'un moteur à combustion interne et élément de filtre d'un filtre de carburant

(30) Priorität: 09.12.2011 DE 102011120648
(43) Veröffentlichungstag der Anmeldung: 12.06.2013
(73) Patentinhaber: MANN + HUMMEL GMBH, 71638 Ludwigsburg (DE)
(72) Erfinder: Veit, Martin, 71116 Gärtringen (DE); Klein, Martin, 71634 Ludwigsburg (DE)

(56) Entgegenhaltungen:
- EP-A2- 1 233 173
- WO-A1-01/72396
- WO-A2-02/05919
- US-A- 3 187 895
- US-A1- 2011 062 075

## Beschreibung

### Technisches Gebiet

Die Erfindung betrifft einen Kraftstofffilter einer Brennkraftmaschine nach Anspruch 1 beziehungsweise ein Filterelement für einen Kraftstofffilter einer Brennkraftmaschine nach Anspruch 7.

### Stand der Technik

Aus der EP 1 233 173 A2 ist ein Flüssigkeitsfilter für Kraftstoffe bekannt, wie er zum Reinigen von Dieselkraftstoff verwendet wird. Der Flüssigkeitsfilter weist ein Filtergehäuse mit einem Zulaufanschluss für zu reinigenden Dieselkraftstoff und einem Ablaufanschluss für gereinigten Dieselkraftstoff auf. Ferner weist der Flüssigkeitsfilter ein Mittelrohr auf, welches zum Entfernen von Wasser, das vom Dieselkraftstoff abgeschieden wurde, verwendet wird. In dem Innenraum des Gehäuses ist ein Filterelement so angeordnet, dass es zwischen den Zulaufanschluss und den Ablaufanschluss geschaltet ist. Das Filterelement weist einen radial von außen nach innen durchströmten Sterneinsatz auf. Im oberen Bereich des Innenraums des Sterneinsatzes ist ein Trenneinsatz angeordnet, der eine kegelige Form aufweist. Dieser Trenneinsatz besteht vorzugsweise aus einem wasserabweisenden Material, um die Wasserabscheidung auf der Reinseite des Sterneinsatzes zu verbessern. Der zu reinigende Dieselkraftstoff strömt über den Zulaufanschluss auf die Schmutzseite im Filtergehäuse. Von dort strömt er radial von außen nach innen durch den Sterneinsatz und gelangt gereinigt auf die Reinseite. Auf die Reinseite dabei gelangende Wasserteilchen sinken im Innenraum des Sterneinsatzes infolge ihres größeren spezifischen Gewichts nach unten und gelangen in einen Wasserspeicherraum, wo sich das ausgeschiedene Wasser sammelt. Der im Innenraum des Sterneinsatzes nach oben abströmende, gereinigte Dieselkraftstoff durchströmt den Trenneinsatz, der durch sein wasserabweisendes Material die Wasserabscheidung wesentlich unterstützt. Stromabwärts des Trenneinsatzes gelangt der Dieselkraftstoff über den Ablaufanschluss aus dem Filtergehäuse heraus. Zwischen dem kegeligen Trenneinsatz und der radial inneren Seite des Sterneinsatzes ist ein Ausfällspalt realisiert, der sich nach unten hin konisch aufweitet. Dieser Ausfällspalt erstreckt sich über weniger als die Hälfte der axialen Ausdehnung des Sterneinsatzes.

Das Dokument WO 02/05919 A2 zeigt einen Kraftstofffilter mit einem sich konisch aufweitenden Ausfällspalt zwischen einem Filtermedium und einem wasserabscheidenden feinmaschigen Gitter.

Aus der US 2011/0062075 A1 ist ein Kraftstofffilter mit stromab des Filterelements angeordnetem Koaleszermedium, einem nachgelagerten Ausfällspalt und einem zweiten hydrophoben Filterelement bekannt.

Der Erfindung liegt die Aufgabe zugrunde, einen Kraftstofffilter und ein Filterelement eines Kraftstofffilters der eingangs genannten Art zu gestalten, bei dem die Filtrierung von Partikeln aus dem Kraftstoff und die Abscheidung von im Kraftstoff enthaltenem Wasser weiter verbessert wird.

### Offenbarung der Erfindung

Diese Aufgabe wird erfindungsgemäß dadurch gelöst, dass sich das Trennmedium mindestens über die gesamte Ausdehnung des Filtermediums erstreckt.

Erfindungsgemäß deckt das Trennmedium eine Reinseite des Filtermediums vollständig ab, so dass sich der Ausfällspalt über die gesamte Reinseite des Filtermediums erstreckt. So kann über die gesamte Ausdehnung der Reinseite des Filtermediums eine Wasserabscheidung erfolgen. Die Abscheideeffizienz des Filterelements wird so verbessert. Wenn vorteilhafterweise vorgesehen ist, dass das Filtermedium von radial innen nach außen durchströmt wird, befindet sich das Trennmedium außerhalb des Filtermediums und umgibt dieses. Wenn alternativ vorgesehen ist, dass das Filtermedium von radial außen nach innen durchströmt wird, befindet sich das Trennmedium in einem Innenraum des Filtermediums. Bei dem mehrstufigen Filterelement werden in dem Filtermedium insbesondere Partikel, welche den Kraftstoff verunreinigen, herausgefiltert. An dem Trennmedium werden Wassertropfen, welche im Kraftstoff enthalten sind, zurückgehalten. Die Wassertropfen werden in dem Ausfällspalt ausgefällt und sinken aufgrund ihres spezifischen Gewichts nach unten. Wenn ein Kraftstoff gereinigt wird, dessen spezifisches Gewicht größer ist als Wasser, steigen analog die Wassertropfen auf. Zu diesem Zweck kann das Filterelement umgekehrt angeordnet werden. Ebenso können der Kraftstoffeinlass, der Kraftstoffauslass und der Wasserauslass entsprechend angeordnet sein. Vorteilhafterweise kann das Wasser insbesondere in einem Wassersammelraum gesammelt werden, welcher mit dem Wasserauslass verbunden ist. Durch die Aufweitung des Ausfällspalts kann erreicht werden, dass die lokale Strömungsgeschwindigkeit des Kraftstoffs geringer ist als die Sinkgeschwindigkeit der Wassertropfen. Einem Gradienten der Strömungsgeschwindigkeit des Kraftstoffs im Ausfällspalt je nach Durchströmung von unten nach oben oder von oben nach unten kann entgegengewirkt werden, sodass die Strömungsgeschwindigkeit über die gesamte Höhe des Filtermediums nahezu konstant bleibt. Durch die gleichmäßige Strömungsgeschwindigkeit im Ausfällspalt wird verhindert, dass vom Kraftstoff Wassertropfen in Strömungsrichtung hinter das Trennmedium mitgerissen werden. Wenn das Trennmedium konisch ist und das Filtermedium umgibt, kann außerdem ein sich konisch aufweitender Raum zwischen dem Trennmedium und einer Innenwand des Gehäuses realisiert werden. Somit kann eine konstante Strömungsgeschwindigkeit auch auf der Ablaufseite des Trennmediums erreicht werden, was sich positiv auf die Wasserabscheidung auswirkt. Durch die Ausdehnung des Trennmediums über die vollständige axiale Länge des Filtermediums und umfangsmäßig wird eine entsprechend große zu durchströmende Oberfläche erreicht. Auf diese Weise wird die Wasserabscheidung verbessert. Ferner wird die Strömungsgeschwindigkeit des Kraftstoffs verringert, was sich auch positiv auf die Wasserabscheidung auswirkt. Das bezüglich des Filtermediums schräge Trennmedium verbessert ferner eine Koaleszenz der Wassertropfen am Trennmedium.

Bei einer vorteilhaften Ausführungsform kann der Ausfällspalt mit seinem großen Querschnitt in Strömungsrichtung des Wassers, insbesondere nach unten, zeigen und dort mit dem Wasserauslass verbunden sein. Die Menge des über die Vertikalhöhe des Ausfällspalts abgetrennten Wassers nimmt auf ihrem durch den Unterschied des spezifischen Gewichts zum Wasser vorgegebenen Weg, insbesondere nach unten zu. Auf diese Weise kann einfach kompensiert werden, dass die Gesamtmenge an abgeschiedenem Wasser entlang des Strömungswegs zunimmt, so dass eine gleichmäßige Strömungsgeschwindigkeit der Wassertropfen entstehen kann.

Vorteilhafterweise kann zwischen dem Filtermedium und dem Trennmedium ein insbesondere als Hohlkörper ausgestaltetes Koaleszenzmedium angeordnet sein, das das Filtermedium oder das Trennmedium umgibt. Vorteilhafterweise begrenzt das Koaleszenzmedium den Ausfällspalt auf der Seite des Filtermediums. An dem Koaleszenzmedium können auch kleinste Wassertröpfchen, welche im Kraftstoff enthalten sind, abgeschieden und zu größeren Wassertröpfchen vereinigt werden. Große Wassertropfen können in Strömungsrichtung des Kraftstoffs hinter dem Koaleszenzmedium in dem Ausfällspalt ausgefällt werden bzw. insbesondere nach unten sinken. Auf diese Weise kann die Wasserabscheidung verbessert werden.

Ferner können vorteilhafterweise das Filtermedium, das Trennmedium und gegebenenfalls das Koaleszenzmedium koaxial angeordnet sein und der Ausfällspalt kann sich in Axialrichtung konisch aufweiten. Eine koaxiale Anordnung ist platzsparend. Ferner kann in einer koaxialen Anordnung ein Strömungsverlauf des Kraftstoffs von radial außen nach innen oder radial innen nach außen einfach optimiert werden.

Des Weiteren können vorteilhafterweise das Filtermedium und gegebenenfalls das Koaleszenzmedium zylindrisch sein und das Trennmedium kann konisch sein. Vorteilhafterweise kann das Koaleszenzmedium flächig an die Reinseite des Filtermediums angrenzen. Durch den zylindrischen Aufbau können das Filtermedium und das etwaige Koaleszenzmedium einfach hergestellt werden. Ein konisches Trennmedium kann ebenfalls einfach hergestellt werden.

Vorteilhafterweise kann das Trennmedium siebartig sein. Ein siebartiges, insbesondere gewebtes Trennmedium hat den Vorteil, dass die Wassertropfen an den Siebfasern gehalten werden und insbesondere nach unten abtropfen. An einem siebartigen Trennmedium wird das Wasser optimal zurückgehalten. Die Maschenöffnungen eines siebartigen Gewebe können einfach und definiert vorgegeben werden. Es kann optimal durchlässig für den Kraftstoff ausgestaltet sein. Mit einem siebartigen Trennmedium kann der Druckverlust minimiert werden.

Im Übrigen kann das Gehäuse öffenbar sein und das Filterelement kann austauschbar im Gehäuse angeordnet sein. Das Filterelement kann so zum Austausch oder zu Wartungszwecken aus dem Gehäuse entfernt werden.

Die Aufgabe wird erfindungsgemäß ferner durch das Filterelement dadurch gelöst, dass sich das Trennmedium über die gesamte Ausdehnung des Filtermediums erstreckt. Die oben im Zusammenhang mit dem erfindungsgemäßen Kraftstofffilter aufgezählten Vorteile und Merkmale gelten für das erfindungsgemäße Filterelement entsprechend.

### Kurze Beschreibung der Zeichnungen

Weitere Vorteile, Merkmale und Einzelheiten der Erfindung ergeben sich aus der nachfolgenden Beschreibung, in der ein Ausführungsbeispiel der Erfindung anhand der Zeichnung näher erläutert wird. Der Fachmann wird die in der Zeichnung, der Beschreibung und den Ansprüchen in Kombination offenbarten Merkmale zweckmäßigerweise auch einzeln betrachten und zu sinnvollen weiteren Kombinationen zusammenfassen.

### Es zeigen schematisch

- Figur 1: einen Längsschnitt eines Kraftstofffilters mit einem austauschbaren, dreistufigen Filterelement;

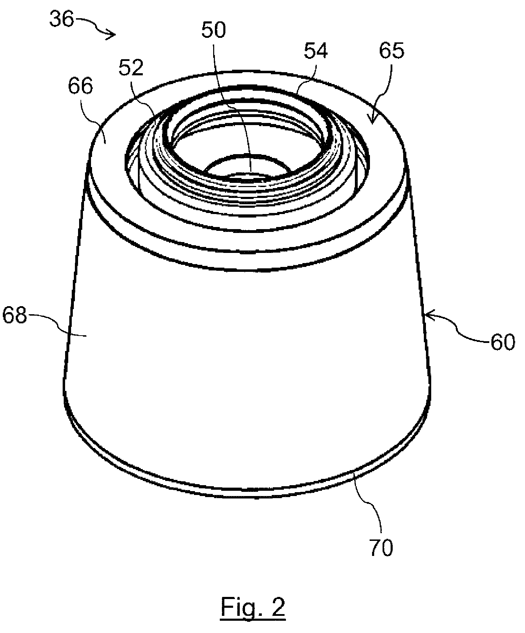

- Figur 2: eine isometrische Darstellung des Filterelements aus der Figur 1.

In den Figuren sind gleiche Bauteile mit gleichen Bezugszeichen versehen.

### Ausführungsform(en) der Erfindung

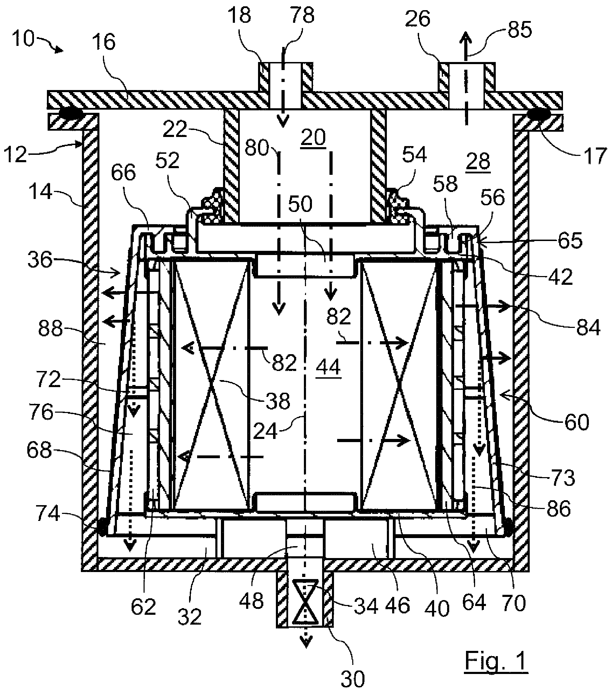

In der Figur 1 ist im Längsschnitt ein Kraftstofffilter 10 eines Kraftstoffsystems einer Brennkraftmaschine eines Kraftfahrzeugs gezeigt. Der Kraftstofffilter 10 dient zur Reinigung des für den Betrieb der Brennkraftmaschine verwendeten Kraftstoffs, beispielsweise Dieselkraftstoff. Ferner dient der Kraftstofffilter 10 zur Abscheidung von in dem Kraftstoff enthaltenem Wasser.

Der Kraftstofffilter 10 verfügt über ein zweiteiliges Gehäuse 12 mit einem becherförmigen Filtertopf 14 und einem Filterdeckel 16, der trennbar auf dem Filtertopf 14 angeordnet ist. Zwischen dem Filtertopf 14 und dem Filterdeckel 16 ist eine Ringdichtung 17 angeordnet.

In dem Deckel 16 ist etwa zentral ein Einlassstutzen 18 für den zu reinigenden Kraftstoff angeordnet, welcher außerhalb des Gehäuses 12 mit einer in der Figur 1 gezeigten Kraftstoffzuleitung verbunden ist. Im Inneren des Gehäuses 12 mündet der Einlassstutzen 18 in einen Zulaufraum 20 in einem Innenraum eines Verbindungsstutzens 22. Der Verbindungsstutzen 22 erstreckt sich auf der dem Inneren des Gehäuses 12 zugewandten Seite des Deckels 16 koaxial zu einer Filterachse 24. "Axial", "radial", "koaxial" und "umfangsmäßig" beziehen sich, wenn nicht anders angegeben, auf die Filterachse 24.

Radial außerhalb des Verbindungsstutzens 22 weist der Deckel 16 ferner einen Auslassstutzen 26 auf, der mit einem Ablaufraum 28 im Gehäuse 12 verbunden ist. Außerhalb des Gehäuses 12 ist der Auslassstutzen 26 mit einer in der Figur 1 nicht gezeigten Kraftstoffableitung für den gereinigten Kraftstoff verbunden.

Im Boden des Filtertopfs 14 ist ein Wasserablaufstutzen 30 koaxial zur Filterachse 24 angeordnet. Der Wasserablaufstutzen 30 ist mit einem Wassersammelraum 32 unten im Gehäuse 12 verbunden. Außerhalb des Gehäuses 12 ist der Wasserablaufstutzen 30 mit einer nicht gezeigten Wasserablassleitung verbunden, über die von dem Kraftstoff abgeschiedenes Wasser aus dem Gehäuse 12 abgeleitet werden kann. In dem Wasserablaufstutzen 30 ist ein Wasserablassventil 34 mit einem Wasserstandsensor angeordnet. Im Ruhezustand ist das Wasserablassventil 34 geschlossen, sodass keine Flüssigkeit aus dem Wassersammelraum 32 durch den Wasserablaufstutzen 30 aus dem Gehäuse 12 entweichen kann. Bei Erreichen eines vorgegebenen maximalen Wasserstandes im Wassersammelraum 32 öffnet das Wasserablassventil 34 automatisch, sodass das abgeschiedene Wasser über den Wasserablaufstutzen 30 abgelassen werden kann.

In dem Gehäuse 12 ist ein Filterelement 36 angeordnet. Das Filterelement 36 trennt den Einlassstutzen 18 dicht von dem Auslassstutzen 26. Das Filterelement 36 umfasst ein sternförmig gefaltetes Filtermedium 38, mit dem insbesondere Partikel aus dem zu reinigenden Kraftstoff heraus filtriert werden. Das Filtermedium 38 hat die Form eines koaxialen Kreiszylinders. An einer dem Boden des Filtertopfs 14 zugewandten unteren Stirnseite ist das Filtermedium 38 dicht mit einer Abschlussendscheibe 40 verbunden. An seiner gegenüberliegenden, der dem Deckel 16 zugewandten oberen Stirnseite ist das Filtermedium 38 dicht mit einer Anschlussendscheibe 42 verbunden.

Die Abschlussendscheibe 40 ist durchgängig geschlossen. Auf ihrer einem Innenraum 44 des Filtermediums 38 zugewandten Seite weist die Abschlussendscheibe 40 einen Stützkragen für das Filtermedium 38 auf. Auf der dem Boden des Filtertopfs 14 zugewandten Außenseite verfügt die Abschlussendscheibe 40 über vier Stützstege 46, die sich gleichmäßig verteilt entlang eines koaxialen gedachten Kreiszylindermantels erstrecken. Der gedachte Kreiszylindermantel umgibt den Wasserablaufstutzen 30. Mit den Stützstegen 46 wird das Filterelement 36 gegen den Boden des Filtertopfs 14 abgestützt. Zwischen den Stützstegen 46 befinden sich Ablauföffnungen 48, über die Wasser aus dem Wassersammelraum 32 in den Wasserablaufstutzen 30 gelangen kann.

Die Anschlussendscheibe 42 weist eine koaxiale Einlassöffnung 50 auf, welche den Zulaufraum 20 mit dem Innenraum 44 verbindet. Die Einlassöffnung 50 ist von einem Zentrierkragen der Anschlussendscheibe 42 umgeben, welcher sich koaxial in den Innenraum 44 erstreckt und an welchem die radial innere Seite des Filtermediums 28 anliegt.

Auf ihrer dem Deckel 16 zugewandten Außenseite verfügt die Anschlussendscheibe 42 über einen zur Filterachse 24 koaxialen Anschlussstutzen 52. Der Anschlussstutzen 52 ist an seiner freien Stirnseite um 90 Grad radial nach innen gebogen. Auf dem radial inneren Rand des Anschlussstutzens 52 sitzt eine Profilringdichtung 54. In dem Anschlussstutzen 52 ist der Verbindungsstutzen 22 des Deckels 16 so eingesteckt, dass die Verbindung mit der Profilringdichtung 54 abgedichtet ist.

Radial außen sind an der Anschlussendscheibe 42 zwei zur Filterachse 24 koaxiale umfangsmäßige Vorsprünge angeordnet, welche eine Aufnahmenut 56 für einen ringartigen Einstecksteg 58 einer Trenneinheit 60 des Filterelements 36 begrenzen.

Radial außen ist das Filtermedium 38 von einem fluiddurchlässigen, koaxialen Stützrohr 62 umgeben, welches die Anschlussendscheibe 42 stabil mit der Abschlussendscheibe 40 verbindet.

Zwischen der radial äußeren Umfangsseite des Filtermediums 38 und dem Stützrohr 62 befindet sich ein koaxiales Koaleszenzmedium 64. Das Koaleszenzmedium 64 ist umfangsmäßig geschlossen und erstreckt sich zwischen der Anschlussendscheibe 42 und der Abschlussendscheibe 40. Das Koaleszenzmedium 64, beispielhaft ein Vlies, dient der Zusammenführung auch von kleinsten Wassertröpfchen im Kraftstoff zu größeren Wassertropfen.

Die Trenneinheit 60 verfügt über einen Stützkorb 65 mit einem Anschlussabschnitt 66, welcher auch den Einstecksteg 58 aufweist, und ein Trennmedium 68. Der Anschlussabschnitt 66 ist etwa becherförmig mit einer zentralen Öffnung in seinem Boden, durch die der Anschlussstutzen 52 hindurch ragt. Sein Innendurchmesser ist etwas größer ist als der Außendurchmesser der Anschlussendscheibe 42. Die Trenneinheit 60 ist mit dem Trennmedium 68 voraus axial auf die Anschlussendscheibe 42 gesteckt. Auf der Seite der Abschlussendscheibe 40 ist die Trenneinheit 60 zum Wassersammelraum 32 hin offen.

Das Trennmedium 68 besteht aus einem hydrophoben Siebgewebe. Es erstreckt sich entlang einer koaxialen Kegelmantelfläche von der Anschlussendscheibe 42 bis zur Abschlussendscheibe 40. Die Grundfläche des entsprechenden Kegels befindet sich auf der Seite der Abschlussendscheibe 40. Das Trennmedium 68 überragt die Abschlussendscheibe 40 in axialer Richtung. Es ist umfangsmäßig geschlossen. Es erstreckt sich insgesamt über die gesamte Ausdehnung des Filtermediums 38 und des Koaleszenzmediums 64 auf der Reinseite des Filtermediums 38. Es deckt das Filtermedium 38 und das Koaleszenzmedium 64 in radialer Richtung betrachtet vollständig ab.

Der Stützkorb 65 weist auf der dem Anschlussabschnitt 66 abgewandten offenen Seite einen koaxialen unteren Stützring 70 auf. Axial zwischen dem unteren Stützring 70 und dem Anschlussabschnitt 66 ist ein koaxialer mittlerer Stützring 72 angeordnet. Der Anschlussabschnitt 66, der mittlere Stützring 72 und der untere Stützring 70 sind über vier umfangsmäßig verteilt angeordnete Axialstreben 73 miteinander verbunden. Das Trennmedium 68 liegt an den radial äußeren Seiten des Anschlussabschnitts 66, des mittleren Stützrings 72, des unteren Stützrings 70 und der Axialstreben 73 an.

An der radial äußeren Umfangsseite des unteren Stützrings 70 ist außerdem eine Ringdichtung 74 angeordnet, welche sich radial außen gegen die innere Umfangsseite des Filtertopfs 14 abstützt. Die Ringdichtung 74 dichtet dem Ablaufraum 28 gegen den Wassersammelraum 32 ab.

Zwischen dem Trennmedium 68 und dem Filtermediums 38 befindet sich ein Ausfällspalt 76. Der Ausfällspalt 76 hat die Form eines Ringraums, der sich axial zum Wassersammelraum 32 hin konisch aufweitet. Der Ausfällspalt 76 ist radial innen durch das hohlzylindrische Koaleszenzmedium 64 und radial außen durch das konische Trennmedium 68 begrenzt. Bei der dargestellten vertikalen Ausrichtung der Filterachse 24 weitet sich der Ausfällspalt 76 also nach unten auf.

Beim Betrieb des Kraftstofffilters 10 wird zu reinigender Kraftstoff aus der Kraftstoffzuleitung angedeutet durch einen Pfeil 78 durch den Einlassstutzen 18 dem Zulaufraum 20 zugeführt. Von dort aus gelangt der Kraftstoff in Richtung von Pfeilen 80 durch die Einlassöffnung 50 in den Innenraum 44 des Filtermediums 38.

Der Kraftstoff durchströmt das Filtermedium 38, angedeutet durch Pfeile 82, von dessen Rohseite radial innen zu seiner Reinseite radial außen. Dabei wird der Kraftstoff von Partikeln befreit. Das Filtermedium 38 bildet eine erste Stufe des insgesamt dreistufigen Kraftstofffilters 10 für die Reinigung/Wasserabscheidung. Auf der Reinseite durchströmt der von Partikeln befreite Kraftstoff das Koaleszenzmedium 64 von radial innen nach außen. Dabei werden im Kraftstoff enthaltene, auch kleinste Wassertröpfen eingefangen und zu größeren Wassertropfen vereinigt. Das Koaleszenzmedium 64 bildet eine zweite Stufe für die Reinigung/Wasserabscheidung.

Der Kraftstoff und die großen Wassertropfen durchströmen die Öffnungen des Stützrohrs 62 und gelangen in den Ausfällspalt 76.

Der Kraftstoff durchströmt das Trennmedium 68, welches eine dritte Stufe für die Reinigung/Wasserabscheidung bildet, von radial innen nach außen, angedeutet durch Pfeile 84, und gelangt in den Ablaufraum 28. Die konische Aufweitung des Ausfällspalts 76 wirkt dabei der Tendenz des gereinigten Kraftstoffs entgegen, bereits oben im Bereich der Anschlussendscheibe 42 aus dem Ausfällspalt 76 in den Ablaufraum 28 zu strömen. Auf diese Weise wird eine gleichmäßige Kraftstoffströmung auch durch das Filtermedium 38 erreicht. Die gleichmäßige Kraftstoffströmung im Filtermedium 38 bewirkt eine gleichmäßige Beladung mit Partikeln, was die Standzeit des Filterelements 36 vergrößert. Durch das Trennmedium 68 wird ferner die Strömungsgeschwindigkeit des Kraftstoffs verringert. Durch die konische Aufweitung des Trennmediums 68 und des Ausfällspalts 76 wird erreicht, dass die Strömungsgeschwindigkeit des Kraftstoffs in axialer Richtung betrachtet nahezu konstant ist.

Zwischen dem Trennmedium 68 und der Innenseite der Umfangswand des Filtertopfs 14 befindet sich des Weiteren ein äußerer Spalt 88, welcher sich entgegen dem Ausfällspalt 76 nach oben hin, also von dem Wassersammelraum 32 weg, konisch aufweitet. Durch diese Aufweitung des äußeren Spalts 88 nimmt der Strömungsquerschnitt nach oben hin zu, sodass die Kraftstoffströmung auch im äußeren Spalt 88 beruhigt wird.

Der gereinigte und von Wasser befreite Kraftstoff verlässt den Ablaufraum 28 über den Auslassstutzen 26, angedeutet durch einen Pfeil 85, und wird der Kraftstoffableitung zugeführt.

Die Wassertropfen hingegen werden durch das Trennmedium 68 zurückgehalten. An dem schräg zur Filterachse 24 verlaufenden Trennmedium 68 werden die Wassertropfen in spiralförmigen Wirbeln zur Oberfläche hin und von dieser wieder wegbewegt. Auf diese Weise kollidieren die Wassertropfen und vereinigen sich zu noch größeren Wassertropfen. Sobald zum Ausfällen ausreichend große Tropfengrößen erreicht sind, sinken die Wassertropfen aufgrund ihres im Vergleich zu Kraftstoff größeren spezifischen Gewichts nach unten, angedeutet durch Pfeile 86, in den Wassersammelraum 32. Dadurch, dass sich der Ausfällspalt 76 nach unten, also in Strömungsrichtung des abgeschiedenen Wassers, aufweitet, wird kompensiert, dass nach unten hin das über die axiale Höhe des Koaleszenzmediums 64 abgeschiedene Wasser kumuliert. Der Strömungsquerschnitt für das Wasser nimmt zu, so dass die Strömungsgeschwindigkeit konstant bleibt. Dies führt zu einer Beruhigung der Wasserströmung und damit auch zu einer Verbesserung der Abscheidung von Wasser. Durch die Beruhigung der Wasserströmung und der Kraftstoffströmung im Ausfällspalt 76 wird verhindert, dass Wassertropfen aus dem Ausfällspalt 76 mit dem Kraftstoff mitgerissen werden und durch das Trennmedium 68 gelangen.

Sobald der Wasserstandsensor des Wasserablassventils 34 das Erreichen des vorgegebenen Maximalwasserstands erfasst, wird das Wasserablassventil 34 automatisch geöffnet. Das Wasser verlässt den Wassersammelraum 32 durch den Wasserablaufstutzen 30 und gelangt in die Wasserablaufleitung.

Zu Wartungszwecken, beispielsweise zum Austausch oder zur Reinigung des Filterelements 36, wird der Deckel 16 axial von dem Filtertopf 14 entfernt. Das Filterelement 36 wird dann axial aus dem Filtertopf 14 gezogen.

Zum Einbau wird das Filterelement 36 mit der Abschlussendscheibe 40 voran in axialer Richtung in den Filtertopf 14 gesteckt. Anschließend wird der Deckel 16 mit dem Verbindungsstutzen 22 voran in axialer Richtung auf die offene Seite des Filtertopfs gesteckt, so dass der Verbindungsstutzen 22 dicht in die Profilringdichtung 54 hineinragt.

Bei dem oben beschriebenen Ausführungsbeispiel eines Kraftstofffilters 10 und eines Filterelements 36 sind unter anderem folgende Modifikationen möglich:

Die Erfindung ist nicht beschränkt auf einen Kraftstofffilter 10 einer Brennkraftmaschine eines Kraftfahrzeugs. Vielmehr kann sie auch bei andersartigen Brennkraftmaschinen, beispielsweise bei Industriemotoren, eingesetzt werden.

Statt für Dieselkraftstoff kann der Kraftstofffilter 10 auch zur ReinigunglVllasserabscheidung bei einem andersartigen flüssigen Kraftstoff eingesetzt werden. Wenn ein Kraftstoff verwendet wird, dessen spezifisches Gewicht größer ist als Wasser, steigen analog die Wassertropfen auf. In diesem Fall kann das Filterelement 36 umgekehrt angeordnet sein. Ebenso können der Kraftstoffeinlass, der Kraftstoffauslass und der Wasserauslass entsprechend angeordnet sein.

Das Filtermedium 38 kann statt sternförmig gefaltet auch als andersartiger Hohlkörper, beispielsweise als Hohlzylinder oder Hohlkegel, beispielsweise mit runder, ovaler oder eckiger Grundfläche, realisiert sein.

Anstelle des Vlieses kann auch ein andersartiges Koaleszenzmedium 64, beispielsweise eine Sieb, ein Gewebe oder ein Granulat, vorgesehen sein.

Auf die Ringdichtung 74 kann auch verzichtet werden. Bevorzugt kann der untere Stützring 70 eng an der radial inneren Umfangsseite des Filtertopfs 14 anliegen.

Das Trennmedium 68 kann statt radial außen das Filtermedium 38 und das Koaleszenzmedium 64 zu umgeben, auch im Innenraum 44 des Filtermediums 38 angeordnet sein. Der zu reinigende Kraftstoff durchströmt dann das Filtermedium 38 von radial auβen nach innen. Das Koaleszenzmedium 64 sollte sich dann ebenfalls im Innenraum 44 des Filtermediums 38 befinden.

Anstelle des Trennmediums 68 können auch das Filtermedium 38 und das Koaleszenzmedium 64 eine konische Form haben. Das Trennmedium 68 kann beispielsweise eine hohlzylindrische Form haben. Zusätzlich oder alternativ kann auch die radial innere Umfangswand des Filtertopfs 14 konisch geformt sein. Auf diese Weise kann die Form des äußeren Spalts 88 beeinflusst werden.

Der zu reinigende Kraftstoff kann statt von oben auch von unten der Rohseite des Filtermediums 38 zugeführt werden. Der Wasserablaufstutzen 30 kann dann statt zentral auch exzentrisch im Boden des Filtertopfs 14 angeordnet sein.

Anstelle des austauschbaren Filterelements 36 kann auch ein im Kraftstofffilter fest montiertes Filterelement vorgesehen sein.

Das Filtermedium 38, das Koaleszenzmedium 64 oder der Trennmedium 68 können statt einer runden auch eine andersartige Grundfläche, beispielsweise eine ovale oder eckige Grundfläche, aufweisen.

Das Filtermedium 38, das Koaleszenzmedium 64 und/oder das Trennmedium 73 können auch anders als koaxial zueinander oder zur Filterachse 24 angeordnet sein.

## Patentansprüche

1. Kraftstofffilter (10) einer Brennkraftmaschine, insbesondere eines Kraftfahrzeugs, mit einem Gehäuse (12), welches wenigstens einen Kraftstoffeinlass (18) für zu reinigenden Kraftstoff, wenigstens einen Kraftstoffauslass (26) für gereinigten Kraftstoff und wenigstens einen Wasserauslass (30) für vom Kraftstoff abgeschiedenes Wasser aufweist und in dem ein Filterelement (36) angeordnet ist, das den Kraftstoffeinlass (18) dicht von dem Kraftstoffauslass (26) trennt, das ein als Hohlkörper ausgestaltetes Filtermedium (38) zur Filtrierung des Kraftstoffs und in Strömungsrichtung des Kraftstoffs hinter dem Filtermedium (38) in dessen Innerem oder dieses umgebend ein als Hohlkörper gestaltetes hydrophobes, kraftstoffdurchlässiges Trennmedium (68) zur Abscheidung von im Kraftstoff enthaltenem Wasser aufweist, die derart angeordnet sind, dass zwischen dem Filtermedium (38) und dem Trennmedium (68) ein Ausfällspalt (76) realisiert ist, der sich konisch aufweitet und der mit dem lNasserauslass (30) verbunden ist, **dadurch gekennzeichnet, dass** sich das Trennmedium (68) wenigstens über die gesamte Ausdehnung des Filtermediums (38) erstreckt, wobei zwischen dem Filtermedium (38) und dem Trennmedium (68) ein als Hohlkörper ausgestaltetes Koaleszenzmedium (64) angeordnet ist, das das Filtermedium (38) oder das Trennmedium (68) umgibt.

2. Kraftstofffilter nach Anspruch 1, **dadurch gekennzeichnet, dass** der Ausfällspalt (46) mit seinem großen Querschnitt in Strömungsrichtung des abgeschiedenen Wassers, insbesondere nach unten, zeigt und dort mit dem Wasserauslass (30) verbunden ist.

3. Kraftstofffilter nach einem der vorigen Ansprüche, **dadurch gekennzeichnet, dass** das Filtermedium (38), das Trennmedium (68) und das Koaleszenzmedium (64) koaxial angeordnet sind und sich der Ausfällspalt (46) in Axialrichtung konisch aufweitet.

4. Kraftstofffilter nach einem der vorigen Ansprüche, **dadurch gekennzeichnet, dass** das Filtermedium (38) und das Koaleszenzmedium (64) zylindrisch sind und das Trennmedium (68) konisch ist.

5. Kraftstofffilter nach einem der vorigen Ansprüche, **dadurch gekennzeichnet, dass** das Trennmedium (68) siebartig ist.

6. Kraftstofffilter nach einem der vorigen Ansprüche, **dadurch gekennzeichnet, dass** das Gehäuse (12) öffenbar ist und das Filterelements (36) austauschbar im Gehäuse (12) angeordnet ist.

7. Filterelement (36) für einen Kraftstofffilter (10) einer Brennkraftmaschine insbesondere eines Kraftfahrzeugs, insbesondere nach einem der vorigen Ansprüche, welches in einem Gehäuse (12) des Kraftstofffilters (10) angeordnet werden kann, das ein als Hohlkörper ausgestaltetes Filtermedium (38) zur Filtrierung des Kraftstoffs und in Strömungsrichtung des Kraftstoffs hinter dem Filtermedium (38) in dessen Innerem oder dieses umgebend ein als Hohlkörper gestaltetes hydrophobes, kraftstoffdurchlässiges Trennmedium (68) zur Abscheidung von im Kraftstoff enthaltenem Wasser aufweist, die derart angeordnet sind, dass zwischen dem Filtermedium (38) und dem Trennmedium (68) ein Ausfällspalt (76) realisiert ist, der sich konisch aufweitet ,
**dadurch gekennzeichnet, dass** sich das Trennmedium (68) über die gesamte Ausdehnung des Filtermediums (38) erstreckt, wobei zwischen dem Filtermedium (38) und dem Trennmedium (68) ein als Hohlkörper ausgestaltetes Koaleszenzmedium (64) angeordnet ist, das das Filtermedium (38) beziehungsweise das Trennmedium (68) umgibt.

## Claims

1. Fuel filter (10) of an internal combustion engine, in particular of a motor vehicle, with a housing (12) which features at least one fuel inlet (18) for fuel to be cleaned, at least one fuel outlet (26) for cleaned fuel and at least one water outlet (30) for water separated from the fuel and in which a filter element (36) is disposed that separates the fuel inlet (18) sealingly from the fuel outlet (26), that features a filter medium (38) designed as hollow body for filtering the fuel and in flow direction of the fuel behind the filter medium (38) in its interior or surrounding it a hydrophobic fuel-permeable separating medium (68) designed as hollow body for separating water contained in the fuel, which are disposed in such a way that between the filter medium (38) and the separating medium (68) a precipitation gap (76) is realized which expands conically and which is connected with the water outlet (30), **characterized in that** the separating medium (68) extends at least across the entire extension of the filter medium (38), a coalescence medium (64) designed as hollow body, which surrounds the filter medium (38) or the separating medium (68), being disposed between the filter medium (38) and the separating medium (68).

2. Fuel filter according to claim 1, **characterized in that** the precipitation gap (46) with its large cross-section is directed in flow direction of the separated water, in particular towards the bottom, and connected there with the water outlet (30).

3. Fuel filter according to one of the above claims, **characterized in that** the filter medium (38), the separating medium (68) and the coalescence medium (64) are disposed coaxially and that the precipitation gap (46) expands conically in axial direction.

4. Fuel filter according to one of the above claims, **characterized in that** the filter medium (38) and the coalescence medium (64) are cylindrical and the separating medium (68) conical.

5. Fuel filter according to one of the above claims, **characterized in that** the separating medium (68) has a sieve-type design.

6. Fuel filter according to one of the above claims, **characterized in that** the housing (12) is openable and that the filter element (36) is disposed replaceably in the housing (12).

7. Filter element (36) for a fuel filter (10) of an internal combustion engine, in particular of a motor vehicle, in particular according to one of the previous claims, which can be disposed in a housing (12) of the fuel filter (10), that features a filter medium (38) designed as hollow body for filtering the fuel and in flow direction of the fuel behind the filter medium (38) in its interior or surrounding it a hydrophobic fuel-permeable separation unit (68) designed as hollow body for separating water contained in the fuel, which are disposed in such a way that between the filter medium (38) and the separating medium (68) a precipitation gap (76) is realized which expands conically, **characterized in that** the separating medium (68) extends across the entire extension of the filter medium (38), a coalescence medium (64) designed as hollow body, which surrounds the filter medium (38) and/or the separating medium (68), being disposed between the filter element (38) and the separating medium (68).

## Revendications

1. Filtre à carburant (10) d'un moteur à combustion interne, notamment d'un véhicule automobile, avec un boîtier (12) qui présente au moins une entrée de carburant (18) pour le carburant à purifier, au moins une sortie de carburant (26) pour le carburant purifié et au moins un écoulement d'eau (30) pour l'eau séparée du carburant et dans lequel est disposé un élément filtrant (36) qui sépare l'entrée de carburant (18) de façon étanche de la sortie de carburant (26) et qui est doté d'un milieu filtrant (38) exécuté sous forme de corps creux et destiné au filtrage du carburant, ainsi que d'un milieu de séparation (68) qui est placé, dans le sens de flux du carburant, derrière le milieu filtrant (38), à l'intérieur ou autour de ce dernier, et est également exécuté sous forme de corps creux, hydrophobe et perméable au carburant, ce milieu de séparation étant destiné à séparer l'eau contenue dans le carburant, les deux milieux étant disposés de telle manière qu'une fente de précipitation (76) soit ménagée entre le milieu filtrant (38) et le milieu de séparation (68) et que cette fente s'élargisse en forme de cône et soit reliée à l'écoulement d'eau (30), **caractérisé en ce que** le milieu de séparation (68) s'étend au moins sur toute la surface du milieu filtrant (38), un milieu de coalescence (64) exécuté sous forme de corps creux et entourant le milieu filtrant (38) ou le milieu de séparation (68) étant disposé entre le milieu filtrant (38) et le milieu de séparation (68).

2. Filtre à carburant selon la revendication 1, **caractérisé en ce que** la grande section de la fente de précipitation (46) est dirigée dans le sens d'écoulement de l'eau séparée, en particulier vers le bas, et soit reliée à cet endroit à l'écoulement d'eau (30).

3. Filtre à carburant selon l'une des revendications précédentes, **caractérisé en ce que** le milieu filtrant (38), le milieu de séparation (68) et le milieu de coalescence (64) sont placés de manière coaxiale et que la fente de précipitation (46) s'élargit en forme de cône en sens axial.

4. Filtre à carburant selon l'une des revendications précédentes, **caractérisé en ce que** le milieu filtrant (38) et le milieu de coalescence (64) sont cylindriques et que le milieu de séparation (68) est conique.

5. Filtre à carburant selon l'une des revendications précédentes, **caractérisé en ce que** le milieu de séparation (68) est de type tamis.

6. Filtre à carburant selon l'une des revendications précédentes, **caractérisé en ce que** le boîtier (12) peut être ouvert et que l'élément filtrant (36) est disposé de manière échangeable dans le boîtier (12).

7. Élément filtrant (36) pour un filtre à carburant (10) d'un moteur à combustion interne, notamment d'un véhicule automobile, en particulier selon l'une des revendications précédentes, qui peut être placé dans un boîtier (12) du filtre à carburant (10) qui est doté d'un milieu filtrant (38) exécuté sous forme de corps creux et destiné au filtrage du carburant, ainsi que d'un milieu de séparation (68) qui est placé, dans le sens de flux du carburant, derrière le milieu filtrant (38), à l'intérieur ou autour de ce dernier, et est également exécuté sous forme de corps creux, hydrophobe et perméable au carburant, ce milieu de séparation étant destiné à séparer l'eau contenue dans le carburant, les deux milieux étant disposés de telle manière qu'une fente de précipitation (76) soit ménagée entre le milieu filtrant (38) et le milieu de séparation (68) et que cette fente s'élargisse en forme de cône, **caractérisé en ce que** le milieu de séparation (68) s'étend sur toute la surface du milieu filtrant (38), un milieu de coalescence (64) exécuté sous forme de corps creux et entourant le milieu filtrant (38) et/ou le milieu de séparation (68) étant disposé entre le milieu filtrant (38) et le milieu de séparation (68).
